Europäisches Patentamt

European Patent Office

Office européen des brevets

(19)

(11) Publication number: **0 236 506**

**A1**

# (12) EUROPEAN PATENT APPLICATION

published in accordance with Art. 158(3) EPC

(21) Application number: **86905401.5**

(22) Date of filing: **02.09.86**

Data of the international application taken as a basis:

(86) International application number:
**PCT/JP86/00446**

(87) International publication number:
**WO87/01475 (12.03.87 87/06)**

(51) Int. Cl.³: **G 05 B 19/403**

(30) Priority: **02.09.85 JP 193341/85**

(43) Date of publication of application:
**16.09.87 Bulletin 87/38**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **IWAGAYA, Takashi Fanuc Hino-shataku 205**
**3-27, Tamadaira, Hino-shi**
**Tokyo 191(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **NUMERICAL CONTROL METHOD.**

(57) An NC unit (11) is so constituted that there can be detachably inserted a ROM cassette (11c) which stores one or more macros (MCR's) to execute a predetermined function. In an inlet port of a standard processing routine of a system program (SPR) is inserted a soft interface (SIF) that contains an instruction which discriminates whether the ROM cassette (11c) is inserted or not, and a branch instruction which, when the ROM cassette is inserted, executes a predetermined macro (MCR) stored in the ROM cassette. In executing the NC processing, if it is discriminated by the soft interface (SIF) that the ROM cassette (11c) has been inserted, a special processing is executed by the macro (MCR) designated by the branch instruction. If it is determined that the ROM cassette (11c) has not been inserted, the standard processing is executed according to the system program without executing the branch instruction.

FIG. 1

DESCRIPTION

NUMERICAL CONTROL METHOD

Technical Field

This invention relates to a numerical control method and, more particularly, to a numerical control method through which an NC apparatus capable of any type of numerical control can be constructed without modifying the system program.

Background Art

A numerical control apparatus is constituted by a computer in which the processor executes predetermined numerical control processing specified by NC data based on system program control, thereby causing a machine tool to subject a part to desired machining.

It goes without saying that the function of the NC apparatus changes if the system program is modified. In other words, by changing the system program, the NC maker is capable of providing various standard NC apparatus for lathes, milling machines, machining centers and wire electric discharge machines, and of providing various NC apparatus of simple to advanced type. If the user requires a special function not possessed by the standard machine, the system program is designed anew to satisfy this requirement.

However, creating a system program anew whenever a special function is required is a large undertaking that can lead to delays in delivery and result in a diminished cost performance.

Recent NC apparatus involve systems of large size owing to the requirement for a number of advanced functions. The participation of many programmers in the designing of a system program involves a programming operation that grows more cumbersome the larger the system program.

Accordingly, an object of the present invention is to provide a numerical control method in which redesigning of a system program is unnecessary even if a special function is required. In other words, an object of the invention is to provide a numerical control method through which special specifications desired by a user can be realized without modifying a system program or hardware.

Another object of the present invention is to provide a numerical control method through which programming can be performed simply even if a system program is large in size. In other words, an object of the invention is to provide a numerical control method through which a total system program can be constructed by adopting a modular approach and performing programming for each function, and thereafter joining the program for each function to the main body of the system program.

Disclosure of the Invention

An arrangement is adopted in which a ROM cassette storing a plurality of macros for performing predetermined numerical control processing is removably loaded in an NC apparatus. If a soft interface 0236506 (instruction) which causes the right of control to be transferred from the system program to a predetermined macro in a case where the ROM cassette has been loaded is inserted in the system program at a suitable location thereof, loading the ROM cassette enables a predetermined function to be executed by the macro stored in the ROM cassette.

Accordingly, if the function executed by the macro is made to agree with the special function required by the user, an NC apparatus which executes the special function required by the user can be formed, even if the system program is not modified, merely by loading and unloading ROM cassettes. Furthermore, since a macro can be programmed as a single module separately of the system program, programming is facilitated.

Thus, the invention is characterized by constructing an NC apparatus in such a manner that a ROM cassette storing one or more macros MCR for executing predetermined functions can be loaded and unloaded, inserting, at suitable locations in a system program SPR, an instruction for discriminating whether the ROM cassette has been loaded and a branch instruction which, if the ROM cassette has been loaded, causes execution of a predetermined macro MCR stored in the ROM cassette, executing, in NC processing, after the execution of the discrimination instruction, a macro designated by the branch command if the ROM cassette has been loaded, and executing the next system program instruction, without executing the branch instruction, if the ROM cassette has not been loaded.

Brief Description of the Drawings

Fig. 1 is a block diagram of an NC apparatus for practicing the present invention;

Fig. 2 is a view for describing the relationship among a system program, soft interface and macro; and

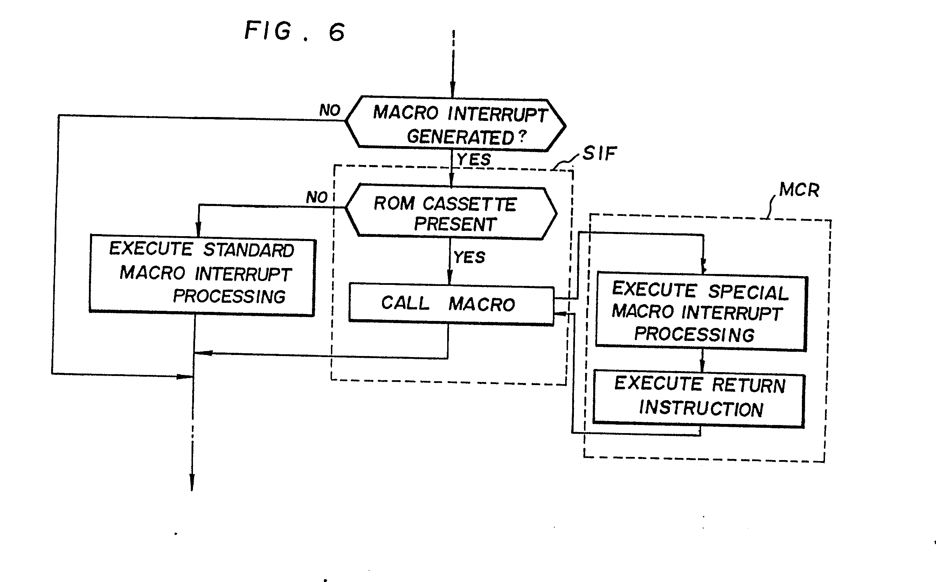

Figs. 3 through 6 are flowcharts in which the present invention is applied to specific cases.

Best Mode for Carrying Out the Invention

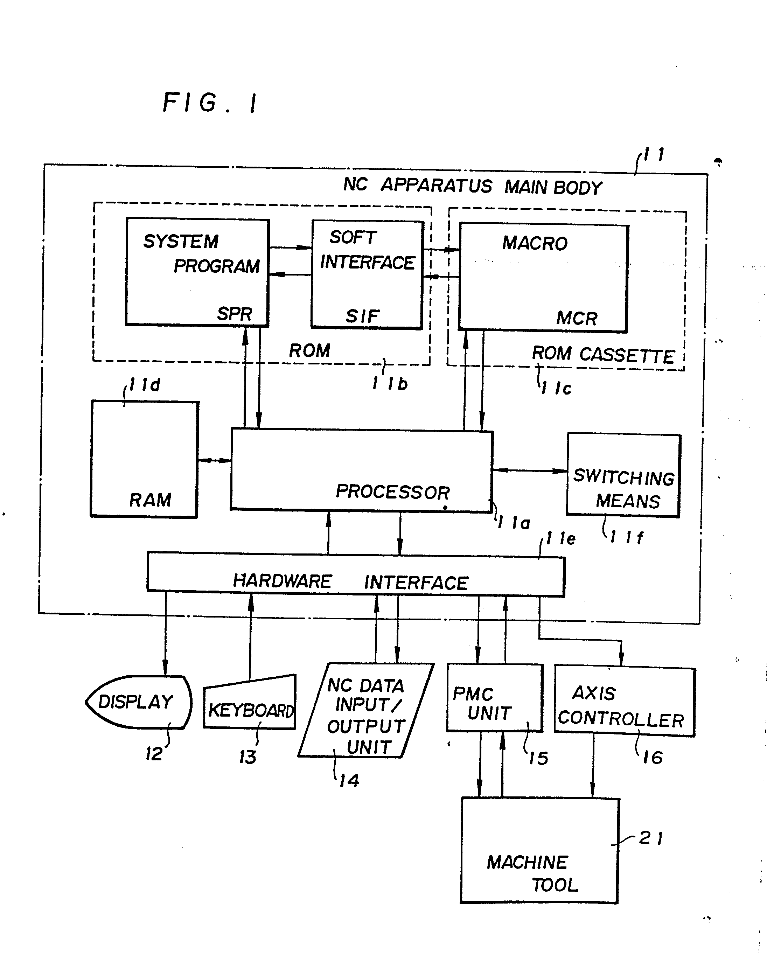

Fig. 1 is a block diagram of an NC apparatus for practicing the method of the present invention.

Numeral 11 denotes the main body of the NC apparatus, 12 a display unit, 13 a keyboard, 14 an NC data input/output unit, 15 a PMC unit (programmable machine controller), 16 an axis controller, and 21 a machine tool.

The NC apparatus main body 11 is constituted by a computer and has a processor 11a, a ROM 11b, an externally loadable ROM cassette 11c, a RAM 11d, a hardware interface 11e, and switching means 11f for setting whether the ROM cassette 11c has been loaded. When necessary, the ROM cassette 11c is removably loaded in the NC apparatus, e.g. on a master printed circuit board. Whether or not the ROM cassette 11c has been loaded is set by the switching means 11f, such as a switch or shorting rod, provided on the master printed circuit board, so that this can be easily read by the processor.

The processor 11a of the NC apparatus main body is adapted to execute predetermined numerical control processing, which is specified by NC data, based on a system program SPR stored in the ROM 11b and a macro MCR stored in the externally loadable ROM cassette 11c. A macro is a collection of commands for executing predetermined numerical control functions and has a subprogram relationship with respect to a system program.

Transfer of the right of control from the system program SPR to the macro MCR, or recovery of the right of control by the system program, is performed via a soft interface SIF. The soft interface SIF is formed by inserting, in the system program SPR at appropriate locations thereof, an instruction for determining whether the ROM cassette 11c has been loaded, and a branch instruction for calling and executing the predetermined macro MCR, which has been stored in the ROM cassette, in a case where the ROM cassette has been loaded.

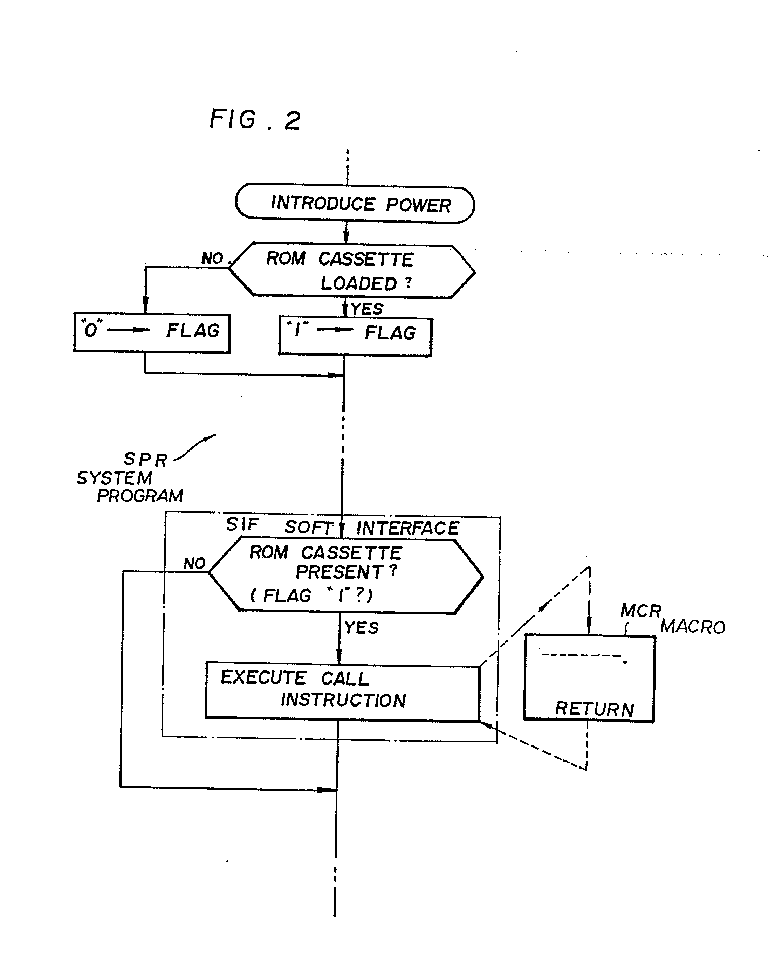

Fig. 2 shows the relationship among the system program SPR, macro MCR and soft interface SIF.

When power is introduced, the processor 11a (Fig. 1), under the control of the system program SPR, checks whether the ROM cassette 11c has been loaded in the NC apparatus. If the ROM cassette 11c has not been

loaded, the flag of a general-purpose register is set to "0"; if the ROM cassette has been loaded, the flag is set to "1".

The soft interface SIF is inserted in the system program SPR at a suitable location. The software interface SIF includes:

(a) a discrimination instruction (an instruction for checking whether the flag bit is "1" or not) for determining whether the ROM cassette 11c has been loaded in the NC apparatus, and

(b) a branch instruction for executing predetermined macro processing when the ROM cassette has been loaded, e.g. a macro call instruction for calling and executing a predetermined macro. If the ROM cassette has not been loaded, processing jumps to the next system program instruction. If the ROM cassette has been loaded, then processing in accordance with the predetermined macro MCR is executed, after which processing jumps to the next system program instruction.

The functions capable of being executed by the macro MCR are as follows:

(1) a special picture display, such as a picture for special tool life management, a picture for automatically deciding cutting conditions, and a conversational-mode picture for automatic programming;

(2) special interpolation, such as SIN interpolation, helical interpolation and elliptical interpolation;

(3) predetermined processing based on an M-code call, e.g. a special ATC cycle (automatic tool change cycle) based on an M06 code;

(4) predetermined processing based on an external interrupt; and

(5) special processing based on a G-code, e.g. a hole drilling pattern cycle, pocket machining cycle, etc.

The present invention will now be described with regard to specific cases.

(A) Display Processing

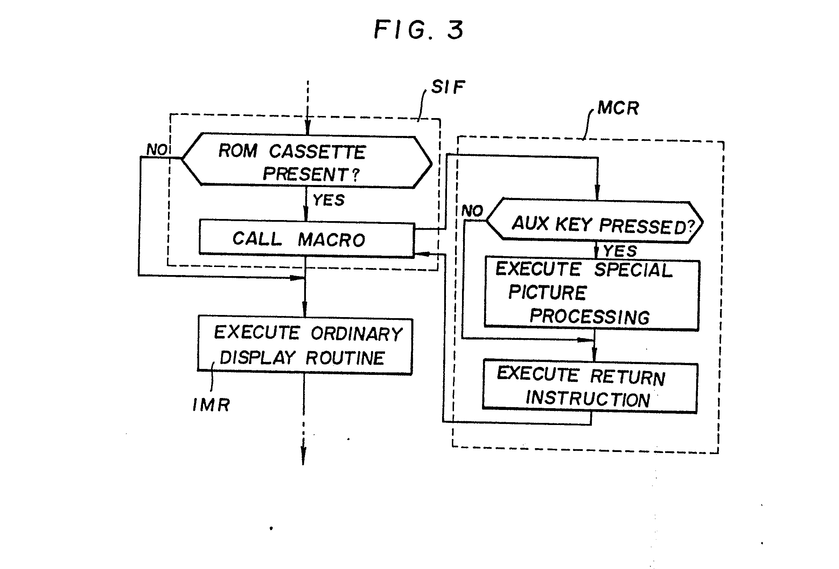

Fig. 3 is a flowchart for displaying a special picture. A CRT/MDI unit (a unit obtained by integrating the display unit 12 and keyboard 13 of Fig. 1) is provided with a function key POS key, PRGRM key, OFSET key, PARM key, ALAM key for requesting a present position display, program display, offset display, parameter display and alarm display, and with an AUX key for requesting a special picture display.

The soft interface SIF is inserted at the entrance to a picture display routine IMR. The arrangement is such that when the ROM cassette has been loaded, a macro for executing special picture processing is called by a call command. The macro MCR is composed of the following:

(a) an instruction for checking whether the AUX key has been pressed to request a special picture

0236506

display;

(b) a group of instructions for executing special picture processing when the AUX key has been pressed; and

(c) a return instruction for returning to the system program SPR at the end of processing or when the AUX key has not been pressed.

More specifically, by constructing the macro MCR in such a manner that predetermined processing for displaying a special picture is executed, the special picture can be described on the display screen by pressing the AUX key.

It should be noted that it can be arranged for the the special picture display not to be performed by inserting only a return instruction in the macro called by the call instruction.

(B) Special Interpolation Processing

If a circular arc interpolation calculation is executed in the XY plane, linear interpolation is performed along the Z axis and the rotation of motors for the respective axes are controlled by distributed pulses along these axes, a tool can be moved in helical fashion. Such interpolation is referred to as helical interpolation.

In accordance with the present invention, an NC apparatus can easily be provided with a helical interpolation function even if a system program is capable solely of linear interpolation and circular arc interpolation. Let helical interpolation be commanded as follows:

G02XxYyRrZzFf:

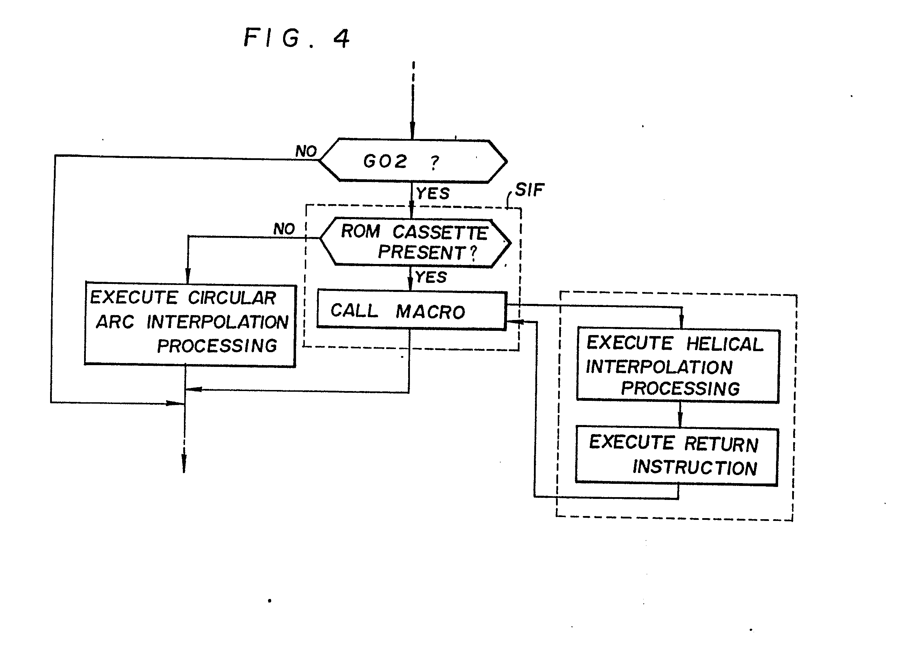

Fig. 4 is a flowchart for providing an NC apparatus with the aforementioned helical interpolation function.

The soft interface SIF is inserted in the system program SPR beforehand following the discrimination processing of G02, and a macro for performing helical interpolation is called by a call instruction. The macro MCR is composed of:

(a) a group of instructions for performing helical interpolation, and

(b) a return instruction for returning to the system program SPR at the end of processing. It should be noted that if the Z axis is not commanded in helical interpolation processing, only ordinary circular arc processing will be carried out.

Thus, the NC apparatus can be provided with the helical interpolation function by constructing the macro MCR in such a manner that helical processing is performed.

It is also possible to arrange it so that helical interpolation is not performed, by inserting only a return instruction in the macro called by the call instruction.

(C) Special ATC Processing

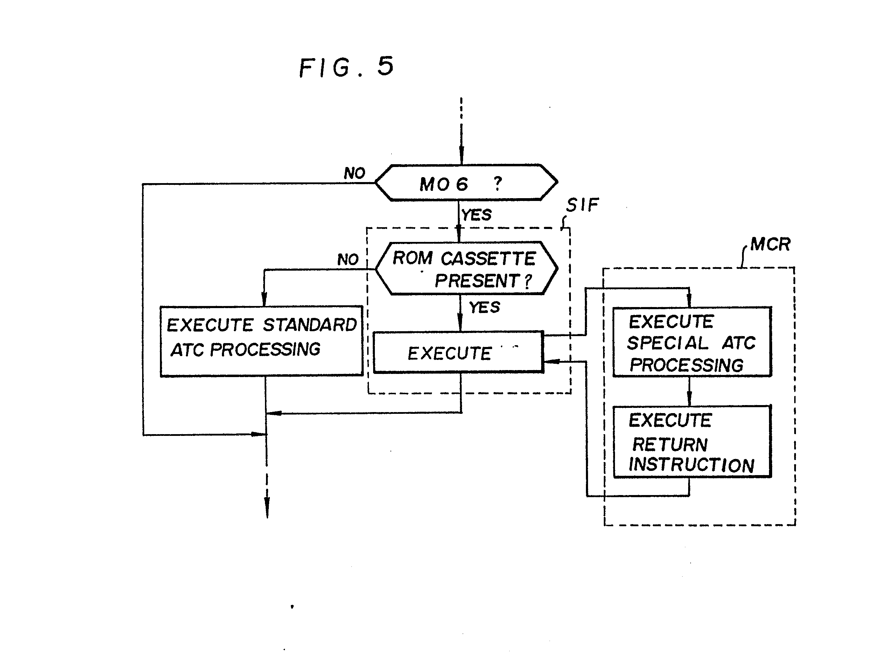

An NC apparatus with an ATC function possesses an ATC cycle function for automatically exchanging a present tool, in response to an M-command "M06T□ □", for the tool T□ □ specified after M06. There are cases where it is desired to execute a user-tailored special ATC cycle instead of the standard ATC cycle. In such cases, the soft interface SIF is inserted beforehand in the system program after the discrimination processing of M06, as shown in the flowchart of Fig. 5, and the macro for performing the special ATC processing is called by the call instruction. The macro MCR is composed of:

(a) a group of instructions for executing special ATC processing, and

(b) a return instruction for returning to the system program SPR at the end of processing.

More specifically, forming the macro MCR in such a manner that predetermined special ATC processing is performed makes it possible to execute the ATC cycle.

It is also possible to arrange it so that the special ATC cycle is not performed, by inserting only a return instruction in the macro called by the call instruction.

### (D) Macro Interrupt Processing

An NC apparatus has a macro interrupt function. For example, this is a function in which, if a tool breaks during machining, the tool is moved to a tool change position along a predetermined path, the tool is exchanged for a new one, the new tool is subsequently moved along a predetermined path to be positioned at the position where breakage occurred, and machining is resumed from this position. There are also cases where another method is used without relying upon the standard macro interrupt processing. For example, a return can be effected to the block where breakage occurred, without returning the new tool to the breakage position, with machining being resumed from the starting point of the block. In such case, the soft interface SIF is inserted in advance after the check for occurrence of the macro interrupt, and the macro for executing the predetermined tool breakage processing is called by the call instruction. The macro MCR is composed of:

(a) a group of instructions for executing predetermined tool breakage processing, and

(c) a return instruction for returning to the system program SPR at the end of tool breakage processing.

More specifically, forming the macro MCR in such a manner that predetermined tool breakage processing is performed makes it possible to provide an NC apparatus with a function for e.g. returning a new tool to the beginning of a block and resuming machining from this point.

It is also possible to arrange it so that the special tool breakage processing is not performed, by inserting only a return instruction in the macro called by the call instruction.

**(E)  Miscellaneous**                                          **0236506**

In an NC apparatus with a programming function, an arrangement can be adopted in which various ROM cassettes are prepared in accordance with the skill level of the operator.  A conversational-mode display conforming to the operator's skill level can be made to appear by interchanging ROM cassettes.

It should be noted that each macro can, as a matter of course, access all areas accessible by the system program, and that the macros can employ general-purpose subroutines, flags and registers.  In addition, if the macro includes an argument designating instruction, the use of variables, arithmetic operations between variables, the use of conditional expressions and all instructions based on assembler language become possible.

In accordance with the invention, a system program need not be redesigned even if a special function is requested; all that is required is a change of externally loadable ROM cassettes.  In other words, special specifications desired by a user can be realized without modifying the system program or hardware configuration.

Further, in accordance with the invention, a system program is programmed in the form of macros by putting the program into module form on a function-by-function basis to the greatest extent possible, and these are then combined to construct the overall system program.  This facilitates programming.

Moreover, a macro constituted solely by a return instruction for returning to the system program without the execution of any processing whatsoever can be provided.  By calling this macro, unnecessary functions will not be implemented even if the ROM cassette has been loaded.

CLAIMS:

1. A numerical control method, characterized by:

constructing an NC apparatus in such a manner that a ROM cassette storing one or more macros for executing predetermined functions can be loaded and unloaded;

inserting, at suitable locations in a system program for controlling the NC apparatus, an instruction for discriminating whether the ROM cassette has been loaded, and a branch instruction which, if the ROM cassette has been loaded, causes execution of a predetermined macro stored in said ROM cassette;

in NC processing, executing, after execution of said discrimination instruction, a macro designated by the branch command if the ROM cassette has been loaded; and

executing the next system program instruction, without executing the branch instruction, if the ROM cassette has not been loaded.

2. A numerical control method according to claim 1, characterized in that whether or not said ROM cassette has been loaded is set by switching means.

3. A numerical control method according to claim 1, characterized in that said macro is a subroutine for executing any of the following: special picture processing, special interpolation processing, special processing based on an M-code call, special processng based on a G-code call, and special processing based on an external interrupt.

0236506

4. A numerical control method according to claim 3, characterized by:

inserting a soft interface, which includes said discrimination instruction and branch instruction, at an entrance to a standard processing routine in the system program;

executing special processing by a macro designated by the branch instruction in a case where the ROM cassette has been inserted; and

executing standard processing by the system program in a case where the ROM cassette has not been loaded.

5. A numerical control method according to claim 1, characterized in that among said macros, a predetermined macro is constituted by a return instruction for returning to the system program without any processing being executed.

6. A numerical control method according to claim 5, characterized in that a macro conforming to said special function is constituted solely by the return instruction.

0236506

# FIG. 1

NC APPARATUS MAIN BODY — 11

SYSTEM PROGRAM — SPR
SOFT INTERFACE — SIF
MACRO — MCR

ROM — 11b
ROM CASSETTE — 11c

11d

RAM
PROCESSOR — 11a
SWITCHING MEANS — 11f

11e
HARDWARE INTERFACE

DISPLAY — 12
KEYBOARD — 13
NC DATA INPUT/ OUTPUT UNIT — 14
PMC UNIT — 15
AXIS CONTROLLER — 16

MACHINE TOOL — 21

0236506

FIG . 2

```
                    ┌─────────────────────┐
                    │  INTRODUCE  POWER   │
                    └─────────────────────┘
                               │
        NO          ╱──────────────────────╲
    ┌───────────────  ROM  CASSETTE          ╲
    │               ╲     LOADED ?           ╱
    │                ╲──────────────────────╱
    │                           │ YES
 ┌──────────────┐        ┌──────────────┐
 │ "O" ──► FLAG │        │ "I" ──► FLAG │
 └──────────────┘        └──────────────┘
        │                       │
        └───────────┬───────────┘
                    │
```

SPR
SYSTEM
PROGRAM

```
    ┌──────────────────────────────────────────────┐
    │     SIF    SOFT   INTERFACE                   │
    │          ╱──────────────────────╲             │
    │  NO     ╱   ROM  CASSETTE         ╲           │
    │ ┌────────    PRESENT ?             ╲          │         ┌─────────────────┐
    │ │       ╲    (FLAG  "I" ?)         ╱          │         │   MCR           │
    │ │        ╲──────────────────────╱            │         │      MACRO      │
    │ │                  │ YES                       │         │ ┌─────────────┐ │
    │ │        ┌──────────────────────┐             │         │ │- - - - - -  │ │
    │ │        │   EXECUTE  CALL       │────────────────────► │ │             │ │
    │ │        │   INSTRUCTION         │             │         │ │  RETURN     │ │
    │ │        └──────────────────────┘             │         │ └─────────────┘ │
    │ │                  │                           │         └─────────────────┘
    │ └──────────────────┤                           │
    └────────────────────┼──────────────────────────┘
                         │
```

# FIG. 3

SIF

```
NO      ROM CASSETTE
        PRESENT?
           │ YES
        ┌──────────────┐
        │ CALL MACRO   │
        └──────────────┘
```

MCR

```
NO      AUX KEY PRESSED?
           │ YES
        EXECUTE SPECIAL
        PICTURE
        PROCESSING

        EXECUTE RETURN
        INSTRUCTION
```

```
EXECUTE ORDINARY
DISPLAY ROUTINE
```

IMR

# FIG. 4

GO2 ? — NO / YES

ROM CASSETTE PRESENT? — NO / YES (SIF)

EXECUTE CIRCULAR ARC INTERPOLATION PROCESSING

CALL MACRO

EXECUTE HELICAL INTERPOLATION PROCESSING

EXECUTE RETURN INSTRUCTION

4/6

0236506

FIG. 5

EXECUTE STANDARD ATC PROCESSING

MO6 ? — NO / YES

ROM CASSETTE PRESENT ? — NO / YES

SIF

EXECUTE

MCR

EXECUTE SPECIAL ATC PROCESSING

EXECUTE RETURN INSTRUCTION

5/6

0236506

FIG. 6

```
                    │
                NO ╱ MACRO INTERRUPT ╲
              ╱─────  GENERATED?
                    ╲                ╱
                         │ YES          ╱─ SIF
         ┌ ─ ─ ─ ─ ─ ─ ─│─ ─ ─ ─ ─ ─ ┐
              NO ╱ ROM CASSETTE ╲              ╱─ MCR
            ╱───────  PRESENT              ┌ ─ ─ ─ ─ ─ ─ ┐
   ┌──────────────┐   ╲          ╱
   │EXECUTE STANDARD│      │ YES        │  ┌──────────────┐ │
   │MACRO INTERRUPT │                      │EXECUTE SPECIAL│
   │  PROCESSING    │  ┌────────────┐   │  │MACRO INTERRUPT│ │
   └──────────────┘  │ CALL MACRO │      │  PROCESSING   │
                      └────────────┘   │  └──────────────┘ │
                                              │
                                          │  ┌──────────────┐ │
                                             │EXECUTE RETURN│
                                          │  │ INSTRUCTION  │ │
                                             └──────────────┘
                                          └ ─ ─ ─ ─ ─ ─ ┘
```

# INTERNATIONAL SEARCH REPORT

0236506

International Application No. PCT/JP86/00446

## I. CLASSIFICATION OF SUBJECT MATTER (If several classification symbols apply, indicate all)

According to International Patent Classification (IPC) or to both National Classification and IPC

Int.Cl$^4$  G05B19/403

## II. FIELDS SEARCHED

| Minimum Documentation Searched | |
|---|---|
| Classification System | Classification Symbols |
| IPC | G05B19/18-19/42, G06F9/00-13/00 |

| Documentation Searched other than Minimum Documentation to the Extent that such Documents are Included in the Fields Searched | |
|---|---|
| Jitsuyo Shinan Koho | 1926 - 1986 |
| Kokai Jitsuyo Shinan Koho | 1971 - 1986 |

## III. DOCUMENTS CONSIDERED TO BE RELEVANT

| Category* | Citation of Document, with indication, where appropriate, of the relevant passages | Relevant to Claim No |
|---|---|---|
| Y | JP, A, 57-189206, (Fujitsu Fanuc Limited) 20 November 1982 (20. 11. 82) P.1, lower right column, line 16 to p.2, upper left column, line 17 & WO, A1, 8204137 & EP, A1, 79388 | 1-6 |
| Y | JP, A, 57-45658, (Fujitsu Fanuc Limited) 15 March 1982 (15. 03. 82) P.2, upper left column, lines 11 to 16 & WO, A1, 8200916 & EP, A1, 58726 | 1-6 |
| Y | JP, A, 54-96337, (Sharp Corporation) 30 July 1979 (30. 07. 79) P.2, upper right column, line 20 to lower left column, line 11 (Family: none) | 1-6 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance, the claimed invention cannot be considered novel or cannot be considered to involve an inventive step

"Y" document of particular relevance, the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 18, 1986 (18.11.86) | December 1, 1986 (01.12.86) |
| International Searching Authority | Signature of Authorized Officer |
| Japanese Patent Office | |

Form PCT/ISA/210 (second sheet) (October 1981)